# EUROPEAN PATENT SPECIFICATION

(11) **EP 1 917 694 B1**
(45) Date of publication and mention of the grant of the patent: **13.02.2013**
(21) Application number: 06795836.3
(22) Date of filing: 31.08.2006
(51) Int. Cl.: H01M 6/52, H01M 10/54, C22B 13/00

(54) **PLANT FOR THE RECOVERY OF SPENT ELECTRIC BATTERIES**
ANLAGE ZUR RÜCKGEWINNUNG VERBRAUCHTER ELEKTRISCHER BATTERIEN
INSTALLATION DE RECUPERATION DE BATTERIES ELECTRIQUES USAGEES

(30) Priority: 02.09.2005 IT TO20050598
(43) Date of publication of application: 07.05.2008
(73) Proprietor: New Energy Power S.R.L., 14019 Villanova d'Asti (AT) (IT)
(72) Inventor: SARACENO, Demetrio, I-10023 Chieri (TO) (IT)
(74) Representative: Garavelli, Paolo
(86) International application number: PCT/IB2006/053028
(87) International publication number: WO 2007/026322

(56) References cited:
- EP-A1- 0 547 466
- FR-A1- 2 512 065
- US-A- 3 892 563
- US-A- 5 173 277
- US-A- 5 303 872

## Description

The present invention relates to a plant for the recovery of spent electric batteries. More particularly, but not exclusively, the present invention refers to a plant for the recovery of so-called lead-acid batteries.

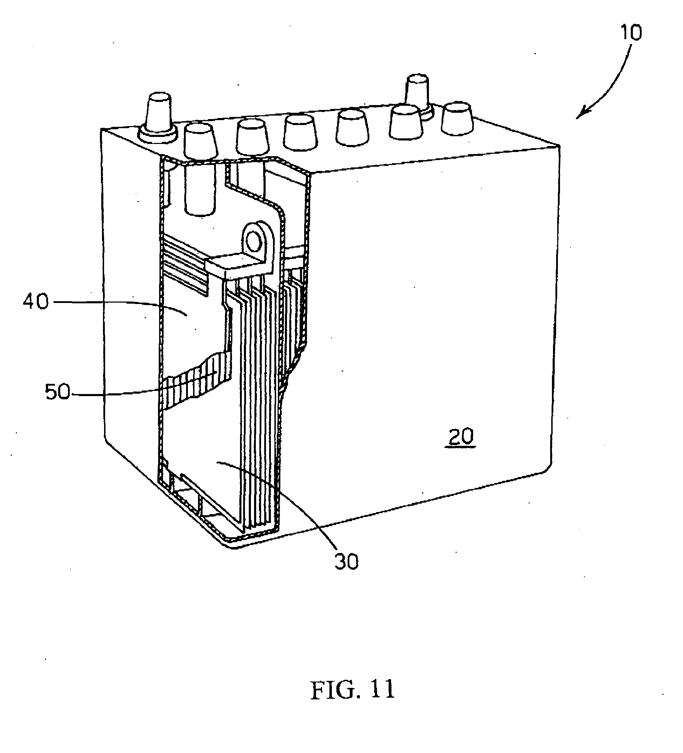

The lead-acid battery is a battery of electrochemical energy accumulators through which the produced current flows in a direction and then in the opposite direction thereof, depending on the reduction-oxidation reactions that occur one after another. A lead-acid battery 10 is represented in Figure 11. The accumulators comprise a positive pole 30 and a negative pole 40 consisting in grids made of lead alloys (for instance, lead- antinomy alloy) coated with a fine lead oxide-based paste (or active material), immersed in an electrolyte consisting in a solution containing sulphuric acid and kept apart one from another by separators 60 made of an insulating material, namely a high molecular weight plastic material (for instance PET , PVC). Said accumulators are housed inside an external casing 20 made of a low molecular weight plastic material, generally polypropylene. Lead-acid batteries are largely widespread in automotive field and they are employed as starting batteries as well as traction batteries in electric motor vehicles; they can also be employed in steady plants, for instance as emergency power supply. The lead-acid battery life varies depending on the field of application and on the conditions of use and it can be estimated around 4 - 6 years. Once the charge is worn-out, the lead- acid battery represents a dangerous waste, since it contains therein toxic substances, namely lead and its compounds as well as sulphuric acid.

For the foregoing reason, plants for the recovery of spent lead-acid batteries have been developed. In these plants, the spent batteries are crushed and the various components of said batteries (grids and poles, paste, polypropylene, separators, electrolyte) are separated, cleansed and recovered.

According to prior art, the crushing, separating, cleansing and recovery operations take place in stationary plants installed in suitable sites. Thus, spent batteries are amassed in suitable stocking sites and periodically drawn therefrom and transported by lorries or similar means of transport to the recovery plants. In this respect see, for instance, US 3,892,562.

It is evident that such a recovery system involves important drawbacks concerning safety, since it implies the transportation of large amounts of highly toxic wastes, even over long distances.

US 5,303,872 discloses a disposal unit for lithium batteries that is manually transportable from one location to another thereby enabling a user to safely discard an exhausted lithium battery 'in loco'.

It is the main object of the present invention to overcome said drawback, providing a plant for the recovery of spent electric batteries that allows to keep off from transportation over long distances.

It is another object of the present invention to provide a plant for the recovery of spent electric batteries that allows the recovering of the most components as possible of said batteries.

It is a further object of the present invention to provide a plant for the recovery of spent electric batteries that is compact and inexpensive.

These and other objects are achieved with a plant for the recovery of spent electric batteries as claimed in the appended claims.

Thanks to the fact that the recovery plant according to the invention comprises a mobile unit carrying the spent batteries crushing and separating apparatuses, the transportation of said batteries over long distances is no longer necessary; on the contrary, said mobile unit can be driven to the spent batteries stocking site, so that the recovery of the spent batteries can be carried out *'in loco'.*

Thanks to the fact that the recovery plant according to the invention comprises a second mobile unit carrying the apparatus for loading the batteries to the crushing apparatus, said plant can be employed in any stocking site, without the need for special facilities. Advantageously, according to a preferred embodiment of the invention, a third mobile unit is provided for the transportation of the power-supply and control devices, so that the plant turns out to be completely autonomous and self-sufficient.

With similar advantage, according to another embodiment of the invention, said second mobile unit carrying the batteries loading apparatus also carries the power-supply and control devices of the plant, which turns out to be completely autonomous and self-sufficient.

Moreover, it is evident that the recovery plant according to the invention has a very limited overall size, substantially equal to the area covered by the aforesaid mobile units (i.e. by one or two semi-trailers); thus, there is no need for large areas or specific structures and the plant can be operated in any stocking site, independently from the present facilities.

The above and other advantages of the invention will become more evident from the detailed description of some preferred embodiments of the invention, given hereinafter by way of non-limiting example, with reference to the attached drawings, wherein:
- Figure 1 is a plan view of the plant according to a first embodiment of the invention;
- Figure 2 is a cross-section along line II-II of the plant of Figure 1;
- Figure 3 is a cross-section along line III-III of the plant of Figure 1;
- Figure 4 is a cross-section along line IV-IV of the plant of Figure 1;
- Figure 5 is a cross-section along line V-V of the plant of Figure 1;
- Figure 6 is a cross-section along line VI-VI of the plant of Figure 1;
- Figure 7 is a cross-section along line III-III of the plant of Figure 1, according to a constructional variant of the invention;
- Figure 8a is a lateral view of the second mobile unit of the plant according to a second embodiment of the invention, during operation;
- Figure 8b is a lateral view of the second mobile unit of the plant according to a second embodiment of the invention, at rest;
- Figure 9a is a lateral view of the first mobile unit of the plant according to a second embodiment of the invention, during operation;
- Figure 9b is a lateral view of the first mobile unit of the plant according to a second embodiment of the invention, at rest;
- Figure 10 is a block diagram schematically showing the operation of the plant according to the invention;
- Figure 11 is a perspective view of a so-called lead-acid type battery.

In the Figures the same numerals have been employed for denoting equal or operationally equivalent components.

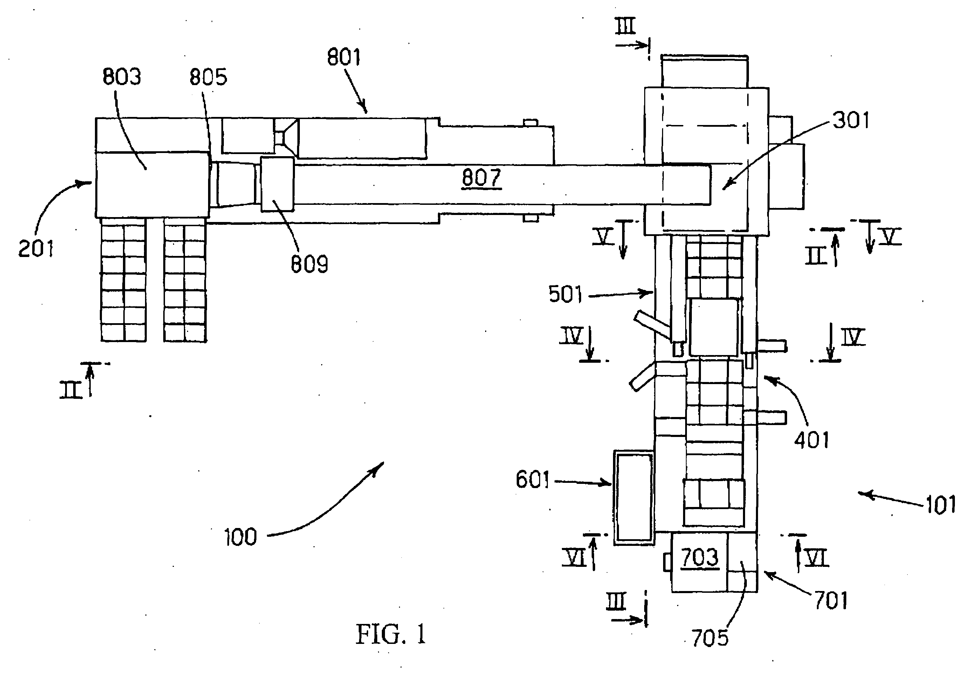

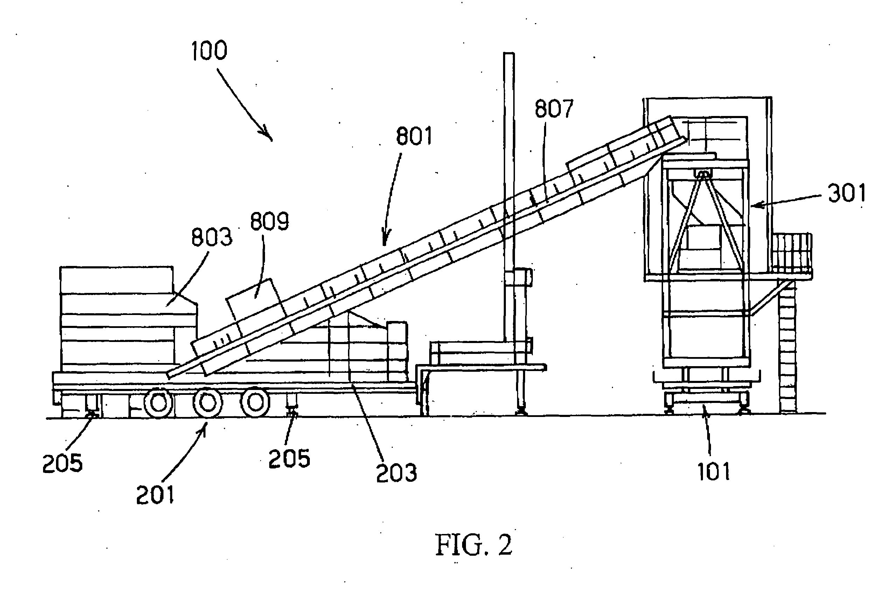

With reference to Figures 1 to 3, the plant 100 for the recovery of electric, batteries is shown, said plant being particularly but not exclusively suitable for recovering batteries 10 of the kind shown in Figure 11 and comprising an external casing 20 made of a low molecular weight plastic material (namely polypropylene), a plurality of grid and poles 30,40 based on lead alloys, a paste or active material based on fine lead oxide, a plurality of separators 50 made of a high molecular weight plastic material (for instance PET and/or PVC) and an electrolyte containing a sulphuric acid solution (if the so-called lead-acid batteries are concerned).

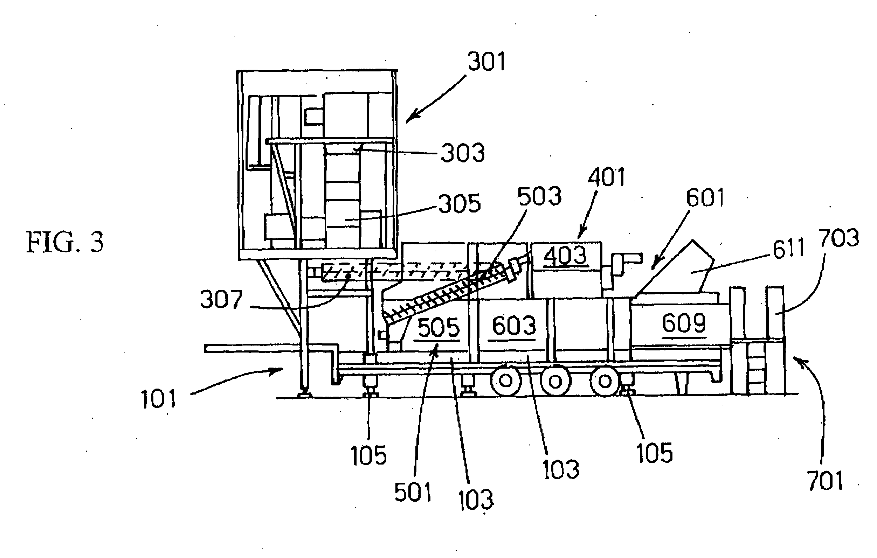

With particular reference to Figure 3, said plant comprises at least a batteries crushing apparatus 301 and a plurality of apparatuses 401-701 for separating and recovering the different components of the treated batteries, apparatuses that will be described in detail later on.

According to the invention, said crushing apparatus 301 and said separating apparatuses 401-701 are advantageously carried on a mobile unit, that in the represented example consists in a semi-trailer 101.

In this way, the recovery plant 100 can be directly driven to the spent batteries stocking sites and the recovery of said batteries can be carried out 'in loco', without the need for transporting the batteries over long distances, thus avoiding the risks related to this transportation.

To this aim, the semi-trailer 101 is provided in its lower portion with one or more collecting tanks 103, allowing to recover possible dripping of electrolyte (generally a solution containing 15-20% of sulphuric acid) coming from the crushing 301 and separating 401-701 apparatuses placed above, avoiding the risk of dispersion in the surrounding environment.

Moreover, the semi-trailer 101 is advantageously provided with a plurality of telescopic supports 105 allowing to support and uniformly distribute the weight of the crushing 301 and separating 401-701 apparatuses during operation.

The crushing apparatus 301 comprises a hopper 303 wherein batteries are loaded, entire and still containing the electrolyte inside, and a hammer mill 305 allowing to shred the batteries so as to obtain a ground product with size lower than about 30 mm. Downstream the mill 305, the crushing apparatus 301 comprises a transferring screw conveyor 307 for measuring and transferring the ground product to the successive separating apparatuses.

Since batteries contain inside them the electrolyte, formed by notoriously corrosive substances, the body and the coatings of the mill 305, as well as the screw conveyor 307, will be preferably made of stainless steel AISI 316, while the hammers of said mill 305 will be preferably made of a thermally treated austenitic-ferritic alloy.

Downstream the crushing apparatus 301 there is the first separating apparatus 401, which receives the ground material from the screw conveyor 307 and allows to separate the metallic components of the batteries - namely grids and poles - from the plastic components thereof.

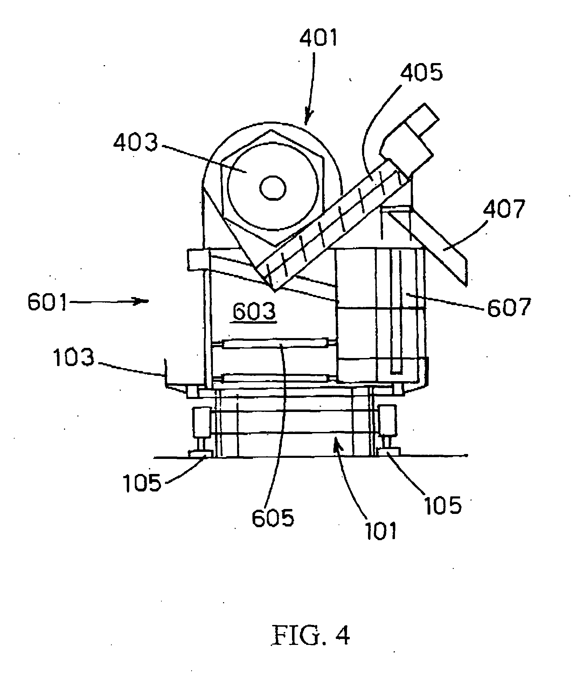

The grids and poles separating apparatus 401 is better shown in Figure 4. Said apparatus 401 comprises a dynamic gravimetric separator 403, for instance a cyclone separator. At the outlet of this gravimetric separator 403, the crushed grids and poles - now separated from most plastic components - are forced to pass through a fine separator 405, of the screw conveyor type, in order to eliminate possible fragments of heavy plastic materials and they are finally ejected through an outlet duct 407.

It is to be noted that the product ejected from the duct 407 will generally have a moisture content of about 3-4% and it will contain a percentage of lead and antinomy on dry bases of about 94%.

Also the gravimetric separator 403 and the fine separator 405 will be preferably made of stainless steel AISI 316 so as to take into consideration the presence of the sulphuric acid.

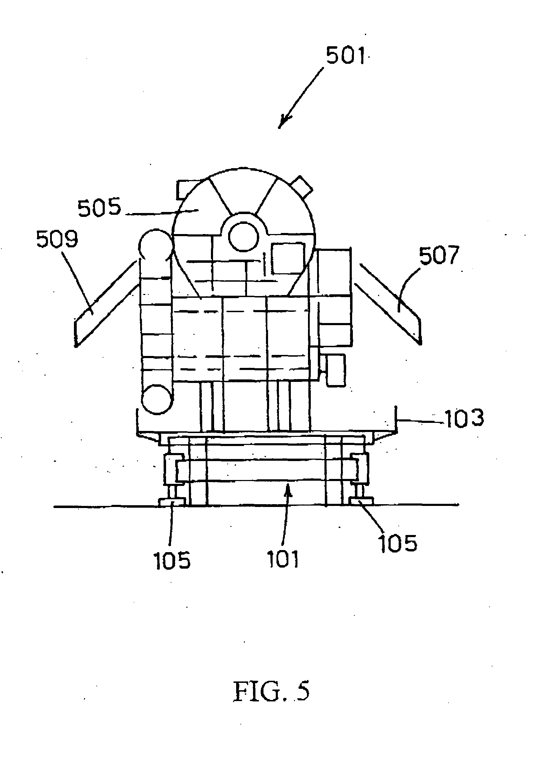

At the outlet of the grids and poles separating apparatus 401, the plastic material is transferred by means of a screw conveyor 503 to a second separating apparatus 501 - shown in Figure 5 - comprising a gravimetric separator, namely a flotation separator 505. Said flotation separator 505 allows to separate polypropylene (low molecular weight plastic material), forming the casings of the spent batteries, from PET, PVC and other high molecular weight plastic material contained in the separators of said batteries.

With reference again to Figure 3, at the outlet of the flotation separator 505, the polypropylene is ejected through a first outlet duct 507, while the high molecular weight plastic materials are ejected through a second duct 509.

It is to be noted that the product ejected through the first duct 507 will generally have a moisture content of about 5-6% and it will contain a percentage of polypropylene on dry bases greater than 95%. Heavy plastic material ejected through duct 509 (which can be considered as the only non recyclable waste coming out from the plant 100) will contain lead in a percentage greater than 0.5% and they will a moisture content of about 15-30 %. Also the flotation separator 505 will be preferably made of stainless steel AISI 316 so as to take into account the presence of sulphuric acid.

All the above-disclosed operations will be carried out in presence of a stream of water which is made to re-circulate by means of a suitable pump and which, by washing the ground material, drags the paste through suitable screening diaphragms (not shown) and conveys it, as a suspension, to a third separating apparatus 601.

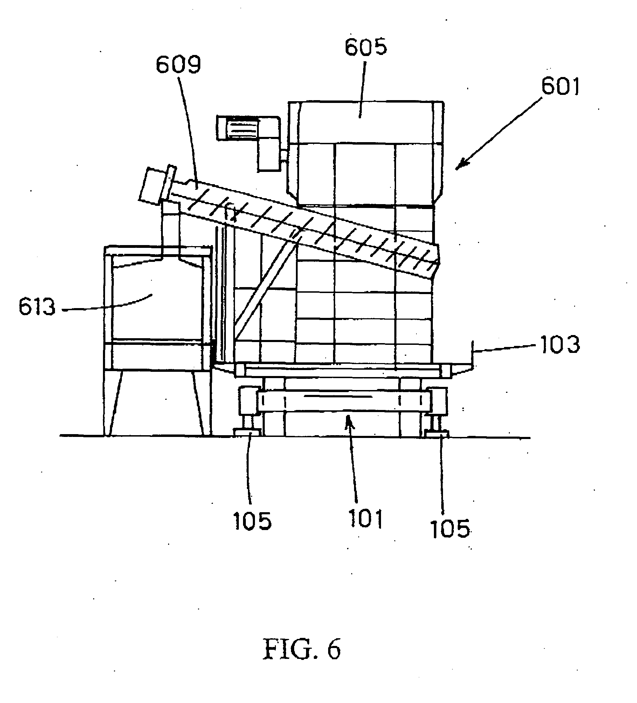

Said paste separating apparatus 601, shown in Figures 4 and 6, comprises a settling tank 603, wherein the thickening of the solid phase and the clarification of the liquid phase are obtained; the settling process is preferably aided by the introduction of a flocculant in the tank 603.

A scraping chain 605 is provided on the bottom of the settling tank 603 for continuously removing the paste, while the clarified water is transferred to a second tank 607.

With particular reference to Figure 6, the scraping chain 605 transfers the paste to a dehydrating screw conveyor 609 and from said screw conveyor the paste is introduced by falling in polypropylene bags 613 of the kind employed in the field of sludge filtration, allowing a final draining for obtaining the desired moisture content degree.

It is to be noted that after the draining the obtained product will generally have a moisture content of about 13 -14% and it will have the appearance of a tixotropic material, principally consisting in a mixture of lead oxide and lead sulphate (with a percentage of lead on dry bases greater than 65%).

As the components of the previously disclosed apparatuses, also the tanks 603,607, the dehydrating screw conveyor 609 and the scraping chain 605 are preferably made of stainless steel AISI 316 so as to take into account the presence of sulphuric acid.

Referring back to Figures 1 to 3, the plant according to the invention further comprises an electrolyte separation apparatus 701 comprising a knit mesh filter 703, preferably made of a polypropylene fabric, and a draining pump 705, that allows to transfer to the filter 703 the draining water of the bags 613 as well as the water collected in the tank 103.

After the filtration, an electrolyte with a concentration in sulphuric acid of about 10-15% and with a content in solid particles lower than 100 ppm will be obtained.

Advantageously, in order to avoid the dispersion of acid mists and contaminated powders, forced ventilation is provided in correspondence of all the zones wherein said substances could be released, so as to convey the possibly contaminated air towards a purifying apparatus, comprising a plate scrubber of the known type.

Always referring to Figures 1 to 3, the plant further comprises an apparatus 801 for loading the spent batteries to the crushing apparatus 301, said loading apparatus 801 being in its turn carried on a second mobile unit, which in the represented example consists in a second semi-trailer 201.

In this way, the recovery plant 100 turns out to be completely autonomous and it can be employed in any stocking site, independently from the facilities available '*in loco*'.

Also the second semi-trailer 201 is advantageously provided in the lower portion with one or more tanks 203 for collecting drippings and with a plurality of telescopic supports 205 allowing to support and uniformly distribute the weight of the loading apparatus 801.

Said loading apparatus 801 substantially comprises a hopper 803, onto which the spent electric batteries can be loaded by means of a mechanical shovel or similar machine said hopper 803 is provided with an extracting device 805, which measures and transfers the batteries to a conveyor belt 807, which transfers the batteries from the hopper 803 of the loading apparatus 801 to the hopper 303 of the crushing apparatus 301.

According to the preferred embodiment of the invention shown in Figures 1 to 3, the loading apparatus 801 further comprises a magnetic separator 809, which removes possible foreign bodies in ferrous materials from the spent batteries carried on the belt 807.

It is to be noted that a third semi-trailer (not shown) can be advantageously provided for the transportation of the electric and mechanical devices necessary for the power-supply and control of the plant 100, said devices substantially comprising a power generating set and an air compressor.

In this way, the plant 100 is made totally autonomous, thus ensuring the maximum flexibility and versatility in performances.

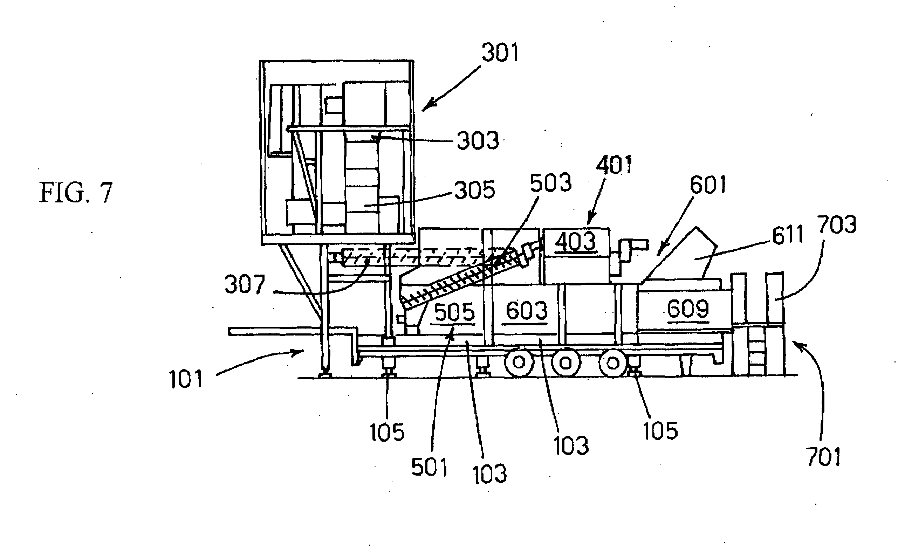

Referring now to Figure 7, a constructional variant of the invention is shown, wherein the crushing 301 and separating 401-701 apparatuses, instead of being permanently fixed to the semi-trailer 101, are mounted on said semi-trailer so that they can be detached therefrom when the semi-trailer has arrived to the site wherein the recovery operations have to be performed.

Therefore, according to this variant, the aforesaid apparatuses 301-701 will be transported on the semi-trailer 101 for instance to a stocking site in a configuration completely similar to the one shown in Figure 3. Once the place of destination is reached, these apparatuses Will be released from the semi-trailer and they will directly rest on the ground, on telescopic supports 105, that in this case will be provided integral with the bottom wall of said apparatuses or with a frame below, instead that with the bottom wall of the semi-trailer.

According to this constructional variant, also the loading apparatus - if available - could be detachably mounted on the second semi-trailer.

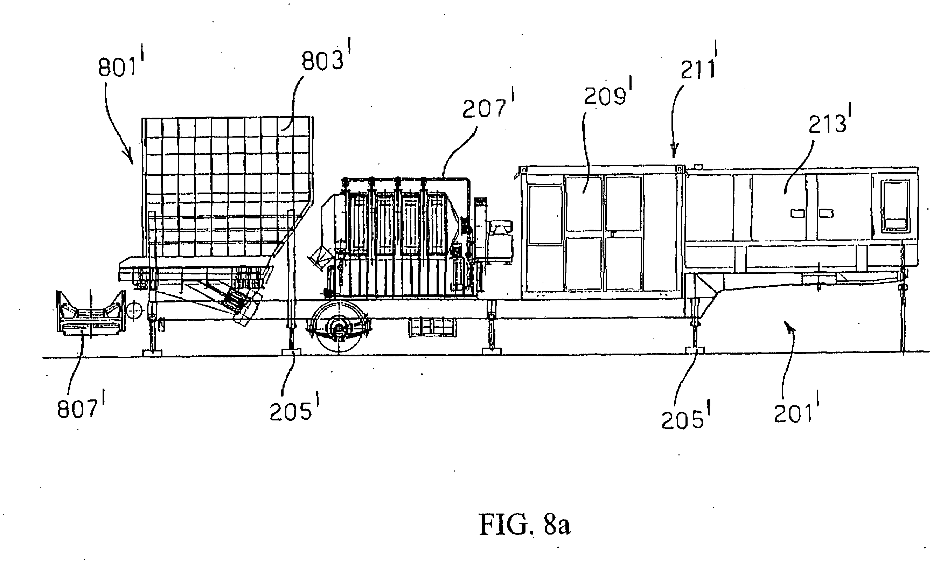

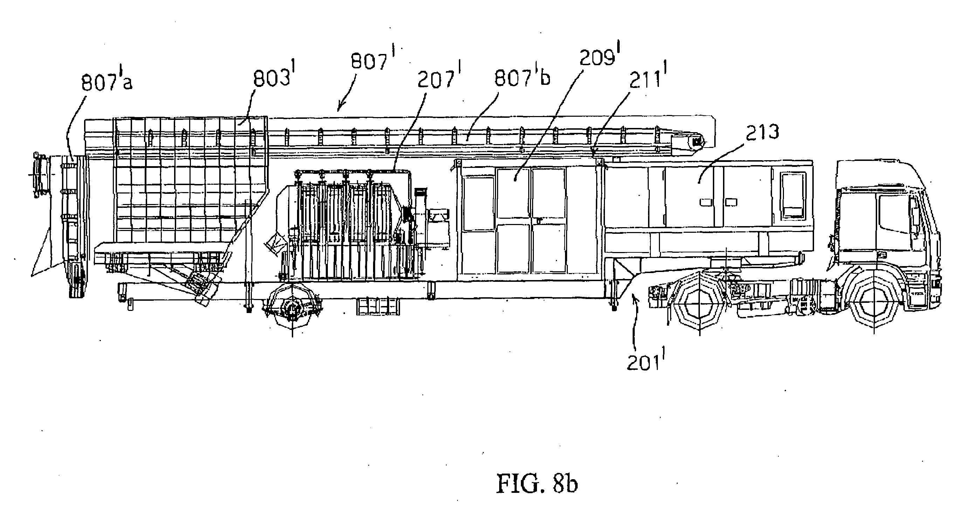

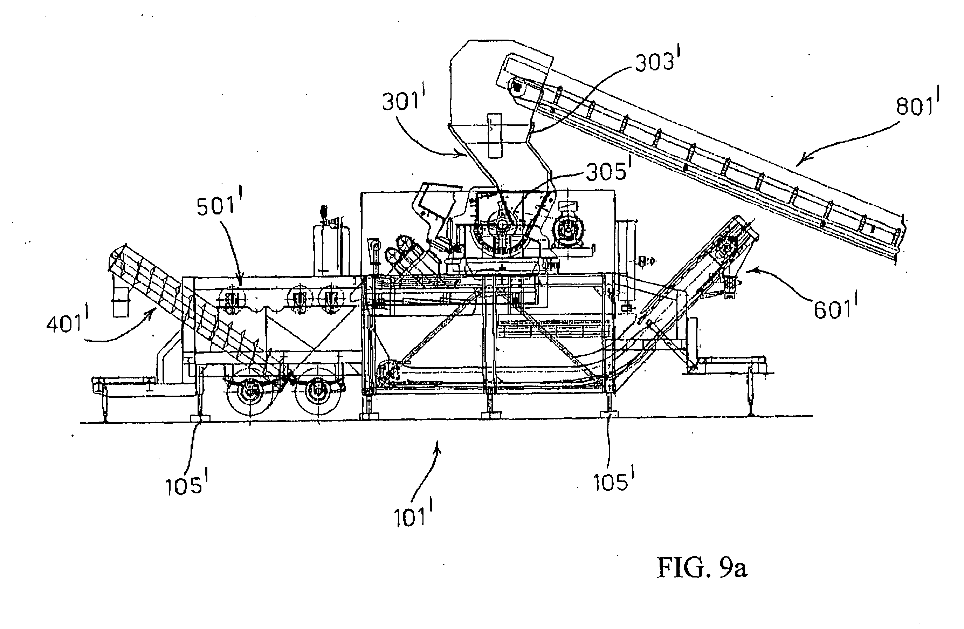

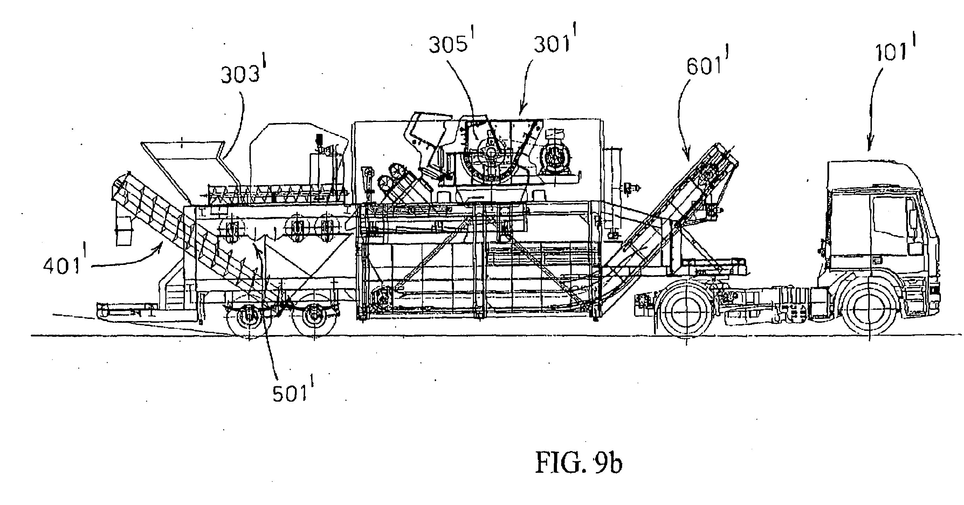

Referring now to Figures 8a,8b,9a,9b, the plant for the recovery of spent electric batteries according to a second embodiment of the invention is schematically shown, said embodiment allowing to obtain an even more compact and autonomous plant.

As shown in Figures 8a and 8b, the second mobile unit or second semi-trailer 201' of said plant carries not only the hopper 803' of the loading apparatus 801', but also a control cabin 209' as well as the electric and mechanical devices 211' for the power-supply and control of the plant, which will substantially comprise a power generating set 213' and an air compressor (not shown).

Thus, according to this second embodiment, it is possible to avoid the use of a third semi-trailer for transporting said devices for power-supply and control.

According to the invention, in order to obtain a more compact and more easily transportable plant, the conveyor belt 807' of the loading apparatus 801' is telescopic, it is detachably connected to the second mobile unit 201' and, when the plant is at rest, it can be folded, removed from the second mobile unit 201' and laid down onto the hopper 803' and the cabin 209', as shown in Figure 8b. More particularly, in the example represented in Figure 8b, the conveyor belt 807' comprises a first section 807'a that during transportation stands in upright position, leaned against the wall of the hopper 803', and a second section 807'b that during transportation lies in horizontal position, laid down onto the hopper 803' and the cabin 209'.

In this way, during transportation, second mobile unit 201' has a reduced overall size and, more particularly, an overall height lower than 4.30 meters, in accordance with the traffic regulations in force in Italy (Art. 61). It is to be noted that such height is largely lower than the height of 7.00 meters that can be reached by the conveyor belt 807' in extended configuration during the loading operations.

Always referring to Figure 8a, it is to be noted that, in the represented example, the conveyor belt 807' of the loading apparatus 801' during operation is placed orthogonal to the longitudinal axis of the semi-trailer 201' (denoted by L arrow in the Figure) and, accordingly, the first and second mobile units 101',201' are placed orthogonal to each other, forming a 'L' shape.

It is evident that, if required by the circumstances of the specific application, thanks to the detachable connection to the mobile unit 201', the conveyor belt 807' could also be placed parallel to the longitudinal axis of the semi-trailer 201'; in this case, the first and second mobile units 101',201' are lined up with each other.

Still referring to Figures 8a,8b, in order to avoid the dispersion of acid mists and contaminated powders coming from the recovery process of the spent batteries, the second mobile unit 201' can also carry a purifying device or scrubber 207'.

In Figures 9a and 9b, the first mobile unit 101' of the plant for the recovery of spent batteries is shown. Said first mobile unit 101' carries the crushing apparatus 301' and the different separating apparatuses, among which the grids and poles separating apparatus 401', the low and high molecular weight plastic materials separating apparatus 501', the paste separating apparatus 601' and, in case, the electrolyte separating apparatus (not shown).

Always in order to obtain a more compact and easily transportable plant, according to the invention the hopper 303' of the crushing apparatus 301' is detachably connected to the mill 305' of said crushing apparatus, so that, when the plant is at rest, this hopper can be removed from the mill 305'. More particularly, the hopper 303' is designed so as to be capable of being laid down on the mobile unit 101' onto the plastic materials separating apparatus 501'. In this way, during transportation, also the first mobile unit 101', which during the recovery process of spent batteries has an overall height of about 7,00 meters, has a limited overall size and, more particularly, an overall height lower than 4,30 meters, in accordance with the traffic regulations in force in Italy (Art. 61).

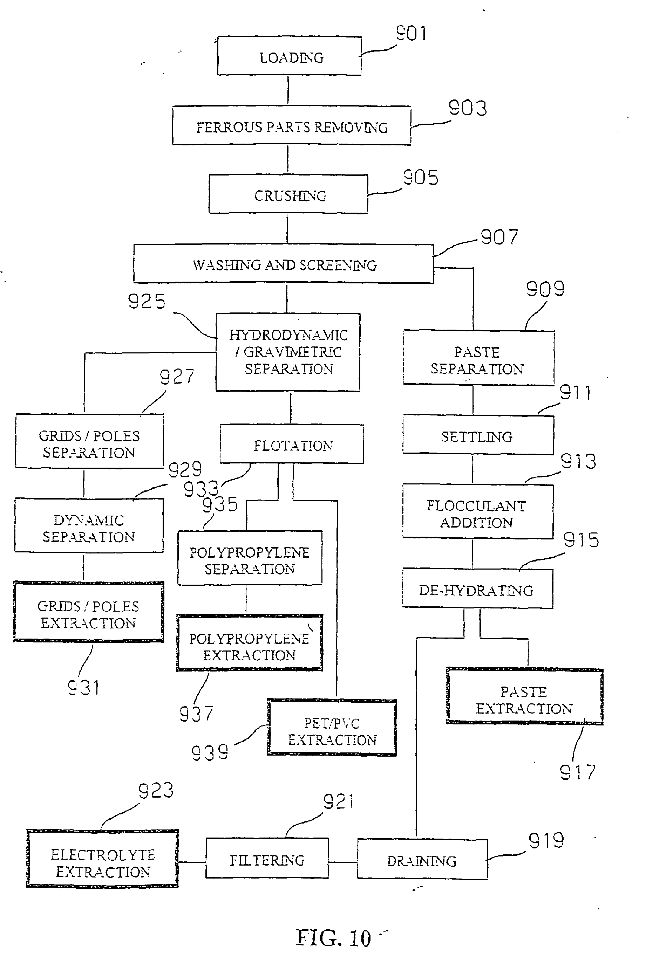

With reference now to Figure 10, the process carried out in the plant according to the invention is schematically shown as a block diagram, said process comprising the following steps:
- the spent lead-acid batteries are loaded on the plant (step 901) by means of a conveyor belt 807,807';
- during the loading step, possible ferrous foreign bodies are removed from said batteries (step 903), for instance by means of a magnetic separator 809;
- the batteries are crushed, for instance by means of a hammer mill 305,305', thus obtaining a ground product with small size (step 905);
- said ground product undergoes washing and screening (step 907), for instance by means of a rotary or vibrating screen, so as to separate the solid fragments from the paste (step 909);
- said paste is made to settle (step 911) in a settling tank 603 so as to clarify the liquid phase and to thicken the solid phase, in case with the aid of a flocculant (step 913);
- the thickened paste undergoes dehydration (step 915) and it is finally extracted (step 917), for instance thanks to a dehydrating screw conveyor 609;
- the extracted paste undergoes draining (step 919) and the draining water is filtered (step 921), for instance by means of a knit mesh filter 703, so as to recover the electrolyte (step 923);
- the solid fragments undergoes gravimetric separation (step 925) by means of a suitable separator 403, for separating lead-based grids and poles from the plastic materials (step 927);
- grids and poles successively undergo a further dynamic fine separation (step 929) and they are finally extracted (step 931);
- plastic materials undergo a further step of flotation separation (step 933) by means of a suitable separator 505 for separating the low molecular weight materials (steps 935-937) from the high molecular weight materials (step 939);

From the above disclosure it is evident that the plant according to the invention fulfils the pre-set objects, since it allows to recover all the components of spent electric batteries (more particularly lead-acid batteries), directly at a stocking site, without the need for transporting said batteries over long distances and independently from the facilities available at this site.

Moreover, it is evident that the plant according to the invention has a very limited size, substantially equal to the size of two semi-trailers 101,201.

It is finally evident that, even if the present invention has been disclosed making reference to particular embodiments, several variants and modifications can be provided without departing from the scope of the invention.

By way of example, even if the invention has been disclosed with reference to the recovery of lead-acid batteries, it can be employed as well for recovering and recycling different kinds of spent batteries, for instance nickel-cadmium batteries. In these batteries the electrodes are respectively made of metallic cadmium and of nickel hydroxide and an alkaline electrolyte (containing potassium hydroxide and lithium hydroxide) is employed.

## Claims

1. Plant (100) for the recovery of spent electric batteries (10), such as lead-acid batteries, said batteries comprising at least:
- a structure (20) made of low molecular weight plastic material;
- a plurality of grids and poles (30,40) made of metallic material;
- a paste or active material;
- a plurality of separators (50) made of high molecular weight plastic material;
- an electrolyte;
said plant comprising at least:
- an apparatus (301; 301') for crushing said electric batteries;
- one or more apparatuses (401-701; 401'-601') for separating said components of said batteries, said separating apparatuses being placed downstream of said crushing apparatus;
**characterised in that** said plant comprises: at least a first mobile unit (101; 101') suitable for road transportation carrying said crushing apparatus (301; 301') and said one or more separating apparatuses (401 -701, 401'-601'); and at least a second mobile unit (201; 201') suitable for road transportation carrying an apparatus (801; 801') for loading said batteries onto said crushing apparatus (301; 301'), said first mobile unit (101; 101') and said second mobile unit (201; 201') being semi-trailers.

2. Plant (100) according to claim 1, wherein said plant comprises an apparatus (401; 401') for separating said grids and said poles.

3. Plant (100) according to claim 1 or 2, wherein said plant (100) comprises an apparatus (501; 501') for separating said low molecular weight plastic material coming from said structure and said high molecular weight plastic material coming from said separators.

4. Plant (100) according to claim 1 or 2 or 3, wherein said plant comprises an apparatus (601; 601') for separating said paste.

5. Plant (100) according to claim 1 or 2 or 3 or 4, wherein said plant comprises an apparatus (701) for separating said electrolyte.

6. Plant (100) according to claim 1, wherein said crushing apparatus (301; 301') comprises a hopper (303; 303') wherein said batteries are loaded, a hammer mill (305; 305') for crushing said battereies and a transferring screw conveyor (307) for transferring said crushed batteries to said separating apparatus(es).

7. Plant (100) according to claim 6, wherein said hopper (303; 303'), the body and coatings of said mill (305; 305') and said transferring screw conveyor (307) are made of stainless steel and wherein the hammers of said mill (305; 305') are made of a thermally treated austenitic-ferritic alloy.

8. Plant (100) according to claim 6 or 7, wherein said hopper (303') of said crushing apparatus (301') is detachably fastened to said mill (305'), so that it can be removed from said mill (305') when said plant is at rest.

9. Plant (100) according to claim 2, wherein said grids and poles separating apparatus (401; 401') comprises a rough gravimetric separator (403) of the dynamic type, such as a cyclone separator, and a fine separator (405), for instrance of the screw conveyor type, for separating said grids and said poles from plastic material fragments.

10. Plant (100) according to claim 9, wherein rough gravimetric separator (403) and said fine separator (405) are made of stainless steel.

11. Plant (100) according to claim 3, wherein said low molecular weight and high molecular weight plastic materials separating apparatus (501; 501') comprise a gravimetric separator (505), for instance a flotation separator.

12. Plant (100) according to claim 11, wherein said gravimetric separator (505) is made of stainless steel.

13. Plant (100) according to claim 4, wherein said paste separating apparatus (601; 601') comprises a circuit for recirculating water provided with a suitable pump, one or more screening diaphragms and a settling tank (603) placed along said circuit, a scraping chain (605) passing through said tank for removing said paste, a dehydrating screw conveyor (609) and an extracting device (611), for instance of the chain type.

14. Plant (100) according to claim 13, wherein said settling tank (603), said dehydrating screw conveyor (609) and said extracting device (611) are made of stainless steel.

15. Plant (100) according to claim 5, wherein said electrolyte separating apparatus (701) comprises a circuit for draining water provided with a suitable pump (705) and a knit mesh filter (703) placed along said draining circuit.

16. Plant (100) according to claim 15, wherein said knit mesh filter (703) is made of a polypropylene fabric.

17. Plant (100) according to any preceding claim, wherein said first mobile unit is provided with one or more collecting tanks (103) below said crushing and separating apparatuses.

18. Plant (100) according to any preceding claim, wherein said first mobile unit is provided with a plurality of telescopic supports (105,105').

19. Plant (100) according to claim 1, wherein said loading apparatus (801; 801') comprises a hopper (803; 803') provided with a measuring and extracting device (805) and a conveyor belt (807; 807') extending from said hopper (803;803') up to said crushing apparatus (301;301')

20. Plant (100) according to claim 19, wherein said conveyor belt (807') is telescopic, is detachably connected to said second mobile unit (201') and can be folded and removed from said second mobile unit when said plant is at rest.

21. Plant (100) according to claim 19 or 20, wherein said conveyor belt (807; 807') extends orthogonally with respect to the longitudinal axis of said second mobile unit (201; 201'), said first and said second mobile units (101, 201; 101', 201') correspondingly being placed orthogonal to each other.

22. Plant (100) according to claim 19 or 20, wherein said conveyor belt (807; 807') extends in parallel with respect to the longitudinal axis of said second mobile unit (201; 201'), said first and said second mobile unit (101, 201; 101', 201') correspondingly being lined up with each other.

23. Plant (100) according to any preceding claim, wherein said loading apparatus (801; 801') further comprises a magnetic separator (809) adjacent to said belt (807) for extracting foreign bodies made of ferrous materials from said batteries advancing onto said belt.

24. Plant (100) according to any preceding claim, wherein said second mobile unit is provided with one or more collecting tanks (203) below said loading apparatus (801).

25. Plant (100) according to any preceding claim, wherein said second mobile unit is also provided with a purifying device or scrubber (207').

26. Plant (100) according to any preceding claim, wherein said second mobile unit is provided with a plurality of telescopic supports (105; 105').

27. Plant (100) according to any preceding claim, wherein said plant further comprises a third mobile unit for transporting electronic and/or mechanical equipment necessary for power supply and control of said plant (100).

28. Plant (100) according to claim 27, wherein said third mobile unit is a third semi-trailer.

29. Plant (100) according to any preceding claim, wherein said second mobile unit (201; 201') further carries electronic and/or mechanical equipment (211') necessary for power supply and control of said plant.

30. Plant (100) according to claim 29, wherein said equipment (211') for power supply and control of said plant comprise a power generating set (213').

31. Plant (100) according to any preceding claim, wherein said apparatuses (301, 401-701; 801) are detachably mounted on said mobile unit(s).

32. Method for the recovery of spent electric batteries (10), such as lead-acid batteries, said batteries comprising at least:
- a structure (20) made of low molecular weight plastic material;
- a plurality of grids and poles (30,40) made of metallic material;
- a paste or active material;
- a plurality of separators (50) made of high molecular weight plastic material;
- an electrolyte;
said method comprising at least the steps of:
- providing a first mobile unit (101; 101'), suitable for road transportation being a semi-trailer, carrying at least an apparatus (301; 301') for crushing said electric batteries and one or more apparatuses (401-701; 401'-601') for separating said components of said batteries, said separating apparatuses being placed downstream of said crushing apparatus;
- providing a second mobile unit (201; 201'), suitable for road transportation being a semi-trailer, carrying at least an apparatus (801; 801') for loading said batteries onto said crushing apparatus (301; 301'), said second mobile unit (201; 201') being attached to said first mobile unit (101; 101');
- driving said first mobile unit (201; 201') and said second mobile unit (201; 201') to a stocking site of said spent electric batteries;
- loading (901) said batteries onto said crushing apparatus provided on said first mobile unit and crushing (905) said batteries;
- separating and extracting (907-939) said components of said batteries by means of said separating apparatuses provided on said first mobile unit.

33. Method according to claim 32, comprising the step of separating and extracting (925-931) said grids and said poles.

34. Method according to claim 32 or 33, comprising the step of separating and extracting (933-937) said low molecular weight plastic material and of separating and extracting (939) said high molecular weight plastic material.

35. Method according to any claim 32 to 34, comprising the step of separating and extracting (909-917) said paste.

36. Method according to any claim 32 to 35, comprising the step of separating and extracting (919-923) said electrolyte.

## Patentansprüche

1. Recycling-Anlage (100) für leere elektrische Batterien (10) wie Bleisäurebatterien, die genannten Batterien enthalten mindestens:
- eine Struktur (20) aus Kunststoff mit niedrigem Molekulargewicht;
- mehrere Gitter und Pole (30, 40) aus Metallmaterial;
- ein Indigosodasulfat oder ein aktives Material;
- mehrere Abscheider (50) aus Kunststoff mit niedrigem Molekulargewicht;
- einen Elektrolyt;
Die genannte Anlage schließt mindestens folgendes ein:
- einen Zerkleinerer (301; 301') zum Zerkleinern der genannten elektrischen Batterien;
- einen oder mehrere Abscheider (401, 701; 401'-601') zum Trennen der genannten Bestandteile der genannten Batterien, die genannten Abscheider sind unter dem genannten Zerkleinerer angebracht;
und ist **dadurch gekennzeichnet, dass** die genannte Anlage folgendes enthält: mindestens eine bewegliche Einheit (101; 101'), die für den Straßentransport geeignet ist und den genannten Zerkleinerer (301, 301') und die genannten ein oder mehrere Abscheider (401-701'; 401'-601') transportiert; und mindestens eine zweite bewegliche Einheit (201; 201'), die für den Straßentransport geeignet ist und eine Vorrichtung (801; 801') für die Ladung der genannten Batterien auf den genannten Zerkleinerer (301; 301') transportiert, die genannte erste bewegliche Einheit (101; 101') und die genannte zweite bewegliche Einheit (201; 201') sind Sattelanhänger.

2. Anlage (100) gemäß Patentanspruch 1, in dem die genannte Anlage eine Vorrichtung (401, 401') für die Trennung der genannten Gitter und der genannten Pole enthält.

3. Anlage (100) gemäß Patentanspruch 1 oder 2, in dem die genannte Anlage (100) eine Vorrichtung (501; 501') für die Trennung des genannten Kunststoffs mit niedrigem Molekulargewicht, der aus der genannten Struktur kommt, und des genannten Kunststoffs mit hohem Molekulargewicht, der aus den genannten Abscheidern kommt, enthält.

4. Anlage (100) gemäß Patentanspruch 1 oder 2 oder 3, in dem die Anlage eine Vorrichtung (601; 601') für die Trennung des genannten Indigosodasulfats enthält.

5. Anlage (100) gemäß Patentanspruch 1 oder 2 oder 3 oder 4, in dem die Anlage eine Vorrichtung (701) für die Trennung des genannten Elektrolyts enthält.

6. Anlage (100) gemäß Patentanspruch 1, in dem der genannte Zerkleinerer (301; 301') einen Trichter (303; 303'), in den die genannten Batterien geladen werden, eine Hammermühle (305; 305') zum Zerkleinern der genannten Batterien und eine Transportschnecke (307) zur Übertragung der zerkleinerten Batterien in die genannten Abscheider enthält.

7. Anlage (100) gemäß Patentanspruch 6, in dem der genannte Trichter (303; 303'), der Körper und die Beschichtungen der genannten Mühle (305; 305') und der genannten Transportschnecke (307) aus rostfreiem Stahl, und in dem die Hammer der genannten Mühle (305; 305') aus einer wärmebehandelten austenitisch-ferritischen Legierung hergestellt werden.

8. Anlage (100) gemäß Patentanspruch 6 oder 7, in dem der genannte Trichter (303') des genannten Zerkleinerers (301') abnehmbar an der genannten Mühle (305') befestigt wird, sodass er von der genannten Mühle (305') abgenommen werden kann, wenn die genannte Anlage in Ruhestellung ist.

9. Anlage (100) gemäß Patentanspruch 2, in dem der genannte Abscheider der Gitter und Pole (401; 401') einen dynamischen Schwerkraftabscheider für grobe Feststoffe (403) wie einen Zyklonabscheider und einen Feinabscheider (405), zum Beispiel eine Schnecke enthält, um die genannten Gitter und die genannten Pole von den Kunststoffbruchstücken zu trennen.

10. Anlage (100) gemäß Patentanspruch 9, in dem der Schwerkraftabscheider für grobe Feststoffe (403) und der genannte Feinabscheider (405) aus rostfreiem Stahl hergestellt werden.

11. Anlage (100) gemäß Patentanspruch 3, in dem die genannten Abscheider (501; 501') aus Kunststoff mit niedrigem Molekulargewicht und mit hohem Molekulargewicht einen Schwerkraftabscheider (505), zum Beispiel einen Flotationsabscheider enthalten.

12. Anlage (100) gemäß Patentanspruch 11, in dem der genannte Schwerkraftabscheider (505) aus rostfreiem Stahl hergestellt wird.

13. Anlage (100) gemäß Patentanspruch 4, in dem der genannte Pastenabscheider (601; 601') einen Wasserumlaufkreislauf enthält, der mit einer entsprechenden Pumpe, einem oder mehreren Abschirmdiagrammen und einem Stabilisierungstank (603), einer Abstreifkette (605), die durch den genannten Tank läuft, um die genannte Paste zu entfernen, einer Entwässerungsschnecke (609) und einer Absauganlage (611), z. B. mit einer Kette, ausgestattet ist.

14. Anlage (100) gemäß Patentanspruch 13, in dem der genannte Stabilisierungstank (603) die genannte Entwässerungsschnecke (609) und die genannte Absauganlage (611) aus rostfreiem Stahl hergestellt werden.

15. Anlage (100) gemäß Patentanspruch 5, in dem der genannte Elektrolytabscheider (701) einen Wasserdrainagekreislauf enthält, der mit einer entsprechenden Pumpe (705) und einem Maschenfilter (703), der längs des genannten Drainagekreislaufes angebracht wird, ausgestattet ist.

16. Anlage (100) gemäß Patentanspruch 15, in dem der genannte Maschenfilter (703) aus Polypropylengewebe hergestellt wird.

17. Anlage (100) gemäß einem beliebigen der vorhergehenden Patentansprüche, in dem die genannte erste bewegliche Einheit mit einem oder mehreren Sammeltanks (103) unter den genannten Zerkleinerern und Abscheidern ausgestattet ist.

18. Anlage (100) gemäß einem beliebigen der vorhergehenden Patentansprüche, in dem die genannte erste bewegliche Einheit mit mehreren Teleskopträgern (105, 105') ausgestattet ist.

19. Anlage (100) gemäß Patentanspruch 1, in dem die genannte Ladevorrichtung (801; 801') einen Trichter (803; 803') enthält, der mit einer Mess- und Absauganlage (805) und einem Förderband (807; 807') ausgestattet ist, das sich vom genannten Trichter (803; 803') bis zum genannten Zerkleinerer (301; 301') erstreckt.

20. Anlage (100) gemäß Patentanspruch 19, in dem das genannte Förderband (807') teleskopisch ist, es ist mit der genannten zweiten beweglichen Einheit (201') verbunden, und kann gebogen und von der genannten zweiten beweglichen Einheit entfernt werden, wenn die genannte Anlage in Ruhestellung ist.

21. Anlage (100) gemäß Patentanspruch 19 oder 20, in dem sich das genannte Förderband (807; 807') orthogonal zur Längsachse der genannten zweiten beweglichen Einheit (201, 201') erstreckt, die genannte erste und zweite bewegliche Einheit (101, 201; 101', 201') werden entsprechend orthogonal zueinander angebracht.

22. Anlage (100) gemäß Patentanspruch 19 oder 20, in dem sich das genannte Förderband (807; 807') parallel zur Längsachse der genannten zweiten beweglichen Einheit (201, 201') erstreckt, die genannte erste und zweite bewegliche Einheit (101, 201; 101', 201') werden entsprechend zueinander ausgerichtet.

23. Anlage (100) gemäß einem beliebigen der vorhergehenden Patentansprüche, in dem die genannte Ladevorrichtung (801; 801') außerdem einen Magnetabscheider (809) neben dem genannten Förderband (807) enthält, um Fremdkörper aus Eisenmaterialien aus den genannten Batterien zu entnehmen, die auf dem genannten Förderband befördert werden.

24. Anlage (100) gemäß einem beliebigen der vorhergehenden Patentansprüche, in dem die genannte zweite bewegliche Einheit mit einer oder mehreren Sammelwannen (203) unter der genannten Ladevorrichtung (801) ausgestattet ist.

25. Anlage (100) gemäß einem beliebigen der vorhergehenden Patentansprüche, in dem die genannte zweite bewegliche Einheit mit einer Reinigungsvorrichtung oder einem Skrubber (207') ausgestattet ist.

26. Anlage (100) gemäß einem beliebigen der vorhergehenden Patentansprüche, in dem die genannte zweite bewegliche Einheit mit mehreren Teleskopträgern (105, 105') ausgestattet ist.

27. Anlage (100) gemäß einem beliebigen der vorhergehenden Patentansprüche, in dem die genannte Anlage außerdem eine dritte bewegliche Einheit enthält, um elektronische und/oder mechanische Geräte zu transportieren, die für die Speisung und Steuerung der genannten Anlage (100) notwendig sind.

28. Anlage (100) gemäß Patentanspruch 27, in dem die dritte bewegliche Einheit ein dritter Sattelanhänger ist.

29. Anlage (100) gemäß einem beliebigen der vorhergehenden Patentansprüche, in dem die genannte zweite bewegliche Einheit (201; 201') außerdem ein elektronisches und/oder mechanisches Gerät (211') transportiert, das für die Speisung und Steuerung der genannten Anlage notwendig ist.

30. Anlage (100) gemäß Patentanspruch 29, in dem das genannte Gerät (211') für die Speisung und Steuerung der genannten Anlage einen Leistungsgenerator (213') enthält.

31. Anlage (100) gemäß einem beliebigen der vorhergehenden Patentansprüche, in dem die genannten Vorrichtungen (301, 401-701; 801) abnehmbar an den genannten beweglichen Einheiten montiert sind.

32. Recycling-Methode für leere elektrische Batterien (10) wie Bleisäurebatterien, die genannten Batterien enthalten mindestens:
- eine Struktur (20) aus Kunststoff mit niedrigem Molekulargewicht;
- mehrere Gitter und Pole (30, 40) aus Metallmaterial;
- ein Indigosodasulfat oder aktives Material;
- mehrere Abscheider (50) aus Kunststoff mit niedrigem Molekulargewicht;
- einen Elektrolyt;
Die genannte Methode schließt folgende Phasen ein:
- Eine erste bewegliche Einheit (101; 101') vorsehen, die für den Straßentransport geeignet ist, welche ein Sattelanhänger ist, der mindestens eine Vorrichtung (301; 301') transportiert, um die genannten elektrischen Batterien zu zerkleinern, und eine oder mehrere Vorrichtungen (401-701; 401'-601'), um die genannten Bestandteile der genannten Batterien zu trennen, die genannten Abscheider werden unter dem genannten Zerkleinerer angebracht;
- Eine zweite bewegliche Einheit (201; 201') vorsehen, die für den Straßentransport geeignet ist, welche ein Sattelanhänger ist, der mindestens eine Vorrichtung (801; 801') transportiert, um die genannten Batterien auf den genannten Zerkleinerer (301; 301') zu laden, die genannte zweite bewegliche Einheit (201; 201') ist an der ersten beweglichen Einheit (101; 101') befestigt
- Die genannte erste bewegliche Einheit (201; 201') und die genannte zweite bewegliche Einheit (201; 201') zu einem Lager für die genannten leeren elektrischen Batterien fahren;
- Die genannten Batterien (901) auf den genannten Zerkleinerer laden, der auf der genannten ersten beweglichen Einheit vorgesehen ist, und die genannten Batterien (905) zerkleinern;
- Die genannten Bestandteile (907-939) mit den genannten Abscheidern, die auf der genannten ersten beweglichen Einheit vorgesehen sind, trennen und aus den genannten Batterien entnehmen.

33. Methode gemäß Patentanspruch 32, die die Trenn- und Entnahmephase der genannten Gitter und der genannten Pole (925-931) enthält.

34. Methode gemäß Patentanspruch 32 oder 33, die die Trenn- und Entnahmephase des genannten Kunststoffs mit niedrigem Molekulargewicht (933-937) und des genannten Kunststoffs mit hohem Molekulargewicht (939) enthält.

35. Methode gemäß einem beliebigen der Patentansprüche von 32 bis 34, die die Trenn- und Entnahmephase des genannten Indigosodasulfats (909-917) enthält.

36. Methode gemäß einem beliebigen der Patentansprüche von 32 bis 35, die die Trenn- und Entnahmephase des genannten Elektrolyts (919-923) enthält.

## Revendications

1. Installation (100) pour la récupération de batteries électriques épuisées (10), telles que batteries au plomb acide, lesdites batteries comprenant au moins :
- une structure (20) composée de matériel plastique à bas poids moléculaire;
- une pluralité de grilles et pôles (30, 40) composés de matériel métallique;
- un pastel ou un matériel actif;
- une pluralité de séparateurs (50) composés de matériel plastique à poids moléculaire élevé;
- un électrolyte;
Ladite installation comprenant au moins:
- un appareil (301; 301') pour broyer lesdites batteries électriques;
- un ou plusieurs appareils (401, 701; 401'-601') pour séparer lesdits composants desdites batteries, lesdits appareils de séparation étant placés en aval dudit appareil de broyage;
**Caractérisé par le fait que** ladite installation comprend : au moins une première unité mobile (101; 101') adaptée au transport routier qui transporte ledit appareil de broyage (301, 301') et lesdits un ou plusieurs appareils de séparation (401-701'; 401'-601'); et au moins une seconde unité mobile (201; 201') adaptée au transport routier qui transporte un appareil (801; 801') pour charger lesdites batteries sur ledit appareil de broyage (301; 301'), ladite première unité mobile (101; 101') et ladite seconde unité mobile (201; 201') étant semi-remorques.

2. Installation (100) selon la revendication 1, dans laquelle ladite installation comprend un appareil (401, 401') pour séparer lesdites grilles et desdits pôles.

3. Installation (100) selon la revendication 1 ou 2, dans laquelle ladite installation (100) comprend un appareil (501; 501') pour séparer ledit matériel plastique à bas poids moléculaire provenant de ladite structure et ledit matériel plastique à poids moléculaire élevé provenant desdits séparateurs.

4. Installation (100) selon la revendication 1 ou 2 ou 3, dans laquelle ladite installation comprend un appareil (601; 601') pour séparer ledit pastel.

5. Installation (100) selon la revendication 1 ou 2 ou 3 ou 4, dans laquelle ladite installation comprend un appareil (701) pour séparer ledit électrolyte.

6. Installation (100) selon la revendication 1, dans laquelle ledit appareil de broyage (301; 301') comprend une trémie (303; 303') dans laquelle sont chargées lesdites batteries, un broyeur à marteau (305; 305') pour broyer lesdites batteries et une vis sans fin de transfert (307) pour transférer lesdites batteries broyées vers lesdits appareils de séparation.

7. Installation (100) selon la revendication 6, dans laquelle ladite trémie (303; 303'), le corps et les revêtements dudit broyeur (305; 305') et de ladite vis sans fin de transfert (307) sont faits en acier inoxydable, et dans laquelle les marteaux dudit broyeur (305; 305') sont faits en un alliage austénitique-ferritique traitée thermiquement.

8. Installation (100) selon la revendication 6 ou 7, dans laquelle ladite trémie (303') dudit appareil de broyage (301') est fixée de façon à pouvoir être détaché dudit broyeur (305'), de façon à ce que ledit broyeur (305') puisse être enlevé quand ladite installation est au repos.

9. Installation (100) selon la revendication 2, dans laquelle ledit appareil de séparation de grilles et pôles (401; 401') comprend un séparateur gravimétrique ordinaire (403) du type dynamique, tel qu'un séparateur à cyclone et un séparateur fin (405), par exemple du type vis sans fin, pour séparer lesdites grilles et lesdits pôles des fragments de matériel en plastique.

10. Installation (100) selon la revendication 9, où le séparateur gravimétrique ordinaire (403) et ledit séparateur fine (405) sont faits en acier inoxydable.

11. Installation (100) selon la revendication 3, dans laquelle lesdits appareils de séparation (501; 501') de matériel en plastique à bas poids moléculaire et à poids moléculaire élevé comprennent un séparateur gravimétrique (505), par exemple un séparateur à flottation.

12. Installation (100) selon la revendication 11, dans laquelle ledit séparateur gravimétrique (505) est fait en acier inoxydable.

13. Installation (100) selon la revendication 4, dans laquelle ledit appareil de séparation de la pâte (601; 601') comprend un circuit pour le recyclage de l'eau doté d'une pompe adaptée, un ou plusieurs diagrammes de blindage et un réservoir de stabilisation (603) placés le long dudit circuit; une chaîne racleuse (605) qui passe à travers ledit réservoir pour enlever ladite pâte, une vis sans fin de déshydratation (609) et un dispositif d'extraction (611), par exemple du type à chaîne.

14. Installation (100) selon la revendication 13, dans laquelle ledit réservoir de stabilisation (603) ladite vis sans fin de déshydratation (609) et ledit dispositif de extraction (611) sont composés d'acier inoxydable.

15. Installation (100) selon la revendication 5, dans laquelle ledit appareil de séparation de électrolyte (701) comprend un circuit pour drainer l'eau doté d'une pompe (705) adaptée et un filtre à maille (703) placé le long dudit circuit de drainage.

16. Installation (100) selon la revendication 15, dans laquelle ledit filtre à maille (703) est fait en tissu en polypropylène.

17. Installation (100) selon une quelconque des revendications précédentes, dans laquelle ladite première unité mobile est dotée d'un ou plusieurs réservoirs de recueil (103) au-dessous desdits appareils de broyage et séparation.

18. Installation (100) selon une quelconque des revendications précédentes, dans laquelle ladite première unité mobile est dotée d'une pluralité de supports télescopiques (105, 105').

19. Installation (100) selon la revendication 1, dans laquelle ledit appareil de chargement (801; 801') comprend une trémie (803; 803') dotée d'un dispositif de mesure et extraction (805) et une bande transporteuse (807; 807') qui s'étend de ladite trémie (803; 803') jusqu'audit appareil de broyage (301; 301').

20. Installation (100) selon la revendication 19, dans laquelle ladite bande transporteuse (807') est télescopique, est reliée de façon à pouvoir être détaché à ladite seconde unité mobile (201') et peut être replié et enlevé de ladite seconde unité mobile quand ladite installation est au repos.

21. Installation (100) selon la revendication 19 ou 20, où ladite bande transporteuse (807; 807') s'étend en sens orthogonal par rapport à l'axe longitudinal de ladite seconde unité mobile (201, 201'), lesdites première et seconde unité mobile (101, 201; 101', 201') étant placées en correspondance l'une de l'autre et orthogonales.

22. Installation (100) selon la revendication 19 ou 20, dans laquelle ladite bande transporteuse (807; 807') s'étend en parallèle par rapport à l'axe longitudinal de ladite seconde unité mobile (201, 201'), ladite première et ladite seconde unité mobile (101, 201; 101', 201') étant alignées en mode correspondant l'une de l'autre.

23. Installation (100) selon une quelconque des revendications précédentes, dans laquelle ledit appareil de chargement (801; 801') comprend en outre un séparateur magnétique (809) adjacent à ladite bande (807) pour extraire des corps étrangers faits de matériaux ferreux desdites batteries qui avancent sur ladite bande.

24. Installation (100) selon une quelconque des revendications précédentes, dans laquelle ladite seconde unité mobile est dotée d'une ou plusieurs bacs de recueil (203) en-dessous du dit appareil de chargement (801).

25. Installation (100) selon une quelconque des revendications précédentes, dans laquelle ladite seconde unité mobile est également dotée d'un dispositif de purification ou scrubber (207').

26. Installation (100) selon une quelconque des revendications précédentes, dans laquelle ladite seconde unité mobile est dotée de une pluralité de supports télescopiques (105; 105').

27. Installation (100) selon une quelconque des revendications précédentes, dans laquelle ladite installation comprend en outre une troisième unité mobile pour transporter des appareillages électroniques et/ou mécaniques nécessaires à l'alimentation et au contrôle de ledit installation (100).

28. Installation (100) selon la revendication 27, dans laquelle ladite troisième unité mobile est une troisième semi-remorque.

29. Installation (100) selon une quelconque des revendications précédentes, dans laquelle ladite seconde unité mobile (201; 201') transporte en outre un appareillage électronique et/ou mécanique (211') nécessaire à l'alimentation et au contrôle de ledit installation.

30. Installation (100) selon la revendication 29, dans laquelle ledit appareillage (211') pour l'alimentation et le contrôle de ledit installation comprend un générateur de puissance (213').

31. Installation (100) selon une quelconque des revendications précédentes, dans laquelle lesdits appareils (301, 401-701; 801) sont montés en mode détachable sur lesdites unités mobiles.

32. Méthode pour la récupération de batteries électriques épuisées (10), telles que des batteries au plomb acide, lesdites batteries comprenant au moins:
- une structure (20) faite de matériel plastique à bas poids moléculaire;
- une pluralité de grilles et pôles (30, 40) composés de matériel métallique;
- un pastel ou matériel actif;
- une pluralité de séparateurs (50) faits de matériel plastique à poids moléculaire élevé ;
- un électrolyte;
Ladite méthode comprenant au moins les phases de:
- prévoir une première unité mobile (101; 101') adaptée au transport routier qui est une semi-remorque qui transporte au moins un appareil (301; 301') pour broyer lesdites batteries électriques et un ou plusieurs appareils (401-701; 401'-601') pour séparer lesdits composants desdites batteries, lesdits appareils de séparation étant placés en aval dudit appareil de broyage;
- prévoir une seconde unité mobile (201; 201'), adaptée au transport routier qui est une semi-remorque, qui transporte au moins un appareil (801; 801') pour charger lesdites batteries su ledit appareil de broyage (301; 301'), ladite seconde unité mobile (201; 201') étant attachée à ladite première unité mobile (101; 101')
- conduire ladite première unité mobile (201; 201') et ladite seconde unité mobile (201; 201') vers un site de stockage desdites batteries électriques épuisées ;
- charger (901) lesdites batteries sur ledit appareil de broyage prévu sur ladite première unité mobile et broyer (905) lesdites batteries;
- séparer et extraire (907-939) lesdits composants desdites batteries au moyen desdits appareils de séparation prévus sur ladite première unité mobile.

33. Méthode selon la revendication 32, comprenant la phase de séparation et d'extraction (925-931) desdites grilles et desdits pôles.

34. Méthode selon la revendication 32 ou 33, comprenant la phase de séparation et extraction (933-937) dudit matériel plastique à bas poids moléculaire et de séparation et extraction (939) dudit matériel plastique à poids moléculaire élevé.

35. Méthode selon une quelconque des revendications de 32 à 34, comprenant la phase de séparation et extraction (909-917) dudit pastel.

36. Méthode selon une quelconque des revendications de 32 à 35, comprenant la phase de séparation et extraction (919-923) dudit électrolyte.
